# EUROPEAN PATENT SPECIFICATION

(11) **EP 3 480 012 B1**
(45) Date of publication and mention of the grant of the patent: **08.09.2021**
(21) Application number: 18202858.9
(22) Date of filing: 26.10.2018
(51) Int. Cl.: B33Y 50/02, H04N 1/40, B29C 64/40, B29C 64/393, B22F 3/105

(54) **METHOD AND ASSEMBLY FOR GENERATING CONTROL DATA FOR THE MANUFACTURE OF A THREE-DIMENSIONAL OBJECT BY MEANS OF AN ADDITIVE MANUFACTURING METHOD**
VERFAHREN UND ANORDNUNG ZUR ERZEUGUNG VON STEUERUNGSDATEN ZUR HERSTELLUNG EINES DREIDIMENSIONALEN OBJEKTS MITHILFE EINES VERFAHRENS ZUR GENERATIVEN FERTIGUNG
PROCÉDÉ ET ENSEMBLE DE GÉNÉRATION DE DONNÉES DE COMMANDE POUR LA FABRICATION D'UN OBJET TRIDIMENSIONNEL AU MOYEN D'UN PROCÉDÉ DE FABRICATION ADDITIVE

(30) Priority: 02.11.2017 US 201715801932
(43) Date of publication of application: 08.05.2019
(73) Proprietor: EOS GmbH Electro Optical Systems, 82152 Krailling (DE)
(72) Inventor: WAIZENEGGER, Christian, 82152 Krailling (DE); HEIN, Peter, 82152 Krailling (DE); WYGANT, Karl, Houston, TX Texas 77079 (US); BOSEN, Werner, Houston, TX Texas 77079 (US)
(74) Representative: Prüfer & Partner mbB Patentanwälte · Rechtsanwälte

(56) References cited:
- GB-A- 2 440 546
- US-A1- 2016 208 708
- US-A1- 2016 238 324
- ALLEN S ET AL: "Determination and evaluation of support structures in layered manufacturing", JOURNAL OF DESIGN AND MANUFACTUR, CHAPMAN & HALL, LONDON, GB, vol. 5, no. 3, 1 September 1995 (1995-09-01), pages 153-162, XP009185172, ISSN: 0962-4694

## Description

The present invention is directed to a method of generating control data for a manufacture of a three-dimensional object by means of an additive manufacturing method. In particular, said manufactured three-dimensional object is destined to be used in a flow path of a fluid flowing in a designated way around or through said object.

In general, an additive manufacturing method is a method of generating objects by adding material. In some cases the building material may be a liquid such as in stereolithography, in other cases the building material will be in powder form such as in selective laser sintering or selective laser melting. Usually the objects are generated layer-wise in a sequential process with each layer corresponding to a cross-section of the object to be generated.

In particular when using a liquid building material, it is necessary to have supports for the object in order to avoid a deformation or movement of the parts during the manufacturing process. However, also in powder-based methods supports are used for making it easier to remove the finished object from the underlying building platform or for compensating stress that occurs during the manufacturing process within the object. For example, US 2010/0042241 A1 describes a method of creating modelling data for a structure to be created by a layered modelling apparatus, wherein support member data are generated taking into consideration an amount of change that will occur during the manufacturing, which amount of change is caused by drying, polymerization or sintering. Whereas US 2010/0042241 A1 describes support structures between a building platform and the object to be built during the manufacturing process, WO 2014/006192 A1 describes in addition non-vertical support structures that may be located e.g. within an internal cavity of the object. Further, Seth et al. describes in "Determination and evaluation of support structures in layered manufacturing" the calculation of support structures based on predetermined orientations of the object to be built to reduce contact regions between the object and the support structures.

The above-mentioned support structures either may remain at the finished object, in cases where this does not lead to any problems, or may be removed from the finished object. With respect to remaining support structures, US 2016/0238324 A1 discloses a method including the building of a tubular object by a layer-by-layer additive manufacturing process. A structure integrally connected as part of a tubular object for supporting a portion of the tubular object is formed during building of the tubular object which provides as functional element of the tubular object vibration dampening, heat shielding, heat transfer, stiffening, energy absorption, or mounting after the tubular object is built. Those support structures are similar to object structures for supporting the object after manufacturing as disclosed in GB 2 440 546 A or US 2016/0208708 A1.

In the case of removing support structures from the finished object, however, after the support structures have been removed, almost always there will remain small support structure residuals on the surface of the produced part. Depending on the surface quality requirements, such residuals need to be removed by post-processing (e.g. milling). This is particularly the case, when a surface region is destined to be located in a flow path of a fluid flowing over this surface, as such small residuals will negatively impair the behavior of the fluid.

Unfortunately, there may exist situations, in which a post-processing does not lead to a sufficient surface quality for a surface to be located within the flow path of a fluid due to deficient process characteristics. In particular, when the fluid flows through a channel through the object, after the removal of the internal support structures it may not be possible to adequately treat the surface within the channel as it is difficult to access.

In view of the above problems it is an object of the invention to provide a method and an assembly for generating control data for the manufacture of a three-dimensional object by means of an additive manufacturing method able to lead to improved flow characteristics of a fluid flowing in a designated way around or through the object to be manufactured.

According to the invention a method of generating control data for a manufacture of a three-dimensional object by means of a layer-wise solidification of a building material (preferably using electromagnetic radiation or particle radiation) is provided, wherein said manufactured three-dimensional object is destined to be used in a flow path of a fluid flowing in a designated way around or through said object. In particular, said method comprises the following steps:
identifying surface data in a three-dimensional computer-based model of said three-dimensional object, said surface data corresponding to at least one surface of the manufactured three-dimensional object, which at least one surface is destined to get into contact with the fluid,
determining the flow path adjacent a portion of said at least one surface in said computer-based model,
modifying said three-dimensional computer-based model thus generating a modified computer-based model such that support structure data are added to the computer-based model, said support structure data specifying a support structure designed to be in contact with said portion of said at least one surface during the manufacture of said three-dimensional object,
wherein said support structure data are added to the computer-based model such that at least one contact region between the support structure and said portion of said at least one surface will essentially extend in parallel to the determined flow path adjacent said portion of said at least one surface and/or such that positions of a plurality of contact regions between a plurality of support structures and said portion of said at least one surface will essentially extend in parallel to the determined flow path adjacent said portion of said at least one surface and
deriving control data for the manufacture of the three-dimensional object from the modified computer-based model.

In the above method, the control data for a manufacture of a three-dimensional object include and/or represent the geometric information about the shape of the object to be manufactured and geometric information about support structures at a surface of the object that comes into contact with a fluid. Of course, control data for the manufacturing may include also other information about the manufacturing process. The above method, however, refers in particular to the subset of the control data describing geometrically the object and some of the support structures.

When applying the above method, a support structure is added to a surface such that the contact region between said support structure and said surface extends essentially in parallel to the flow path at the surface. Thereby, the flow characteristics after a removal of the support structure are influenced only to a minimum extent, even if support structure residuals remaining on the surface were in contact with the fluid.

Furthermore, in the case of a plurality of support structures at a portion of a surface, according to the invention the positions of the respective plurality of contact regions between the support structures and the portion essentially will extend in parallel to the flow path adjacent said portion. This feature too will lead to a situation in which the flow characteristics are influenced only to a minimum extent by the residuals.

The invention is also applicable to a situation, in which the flow path of a fluid is different for different portions of the surface coming into contact with the fluid. Of course, the flow path may also depend on the velocity and type of the fluid. However, when an object to be used in the flow path of a fluid is designed, usually the behaviour of such object is simulated already at the design stage using specific information about the intended fluid flow. From such simulations, which are state of the art, information about the flow path of the fluid is available and can be used for implementing the inventive method.

The method according to the invention leads to an effect even when applied only to a portion of a surface that will come into contact with a fluid, meaning when applied only to a part of the surface area coming into contact with a fluid. However, it is also possible that support structures are added in an inventive way to the whole surface potentially coming into contact with a fluid.

According to the invention, as soon as a support structure is added to a surface that will be in the flow path of a fluid, it is advantageous to design said support structure in accordance with the above-described inventive method. The specific locations where support structures have to be added are known to the skilled person from simulation or experience.

Preferably, said support structure data define a support structure that has a longitudinal shape such that in a direction in parallel to the flow path it is longer than in any other direction not in parallel to the flow path.

When a support structure has a longitudinal shape extending in parallel to the flow path (which means that the support structure is orientated along the flow path), the flow characteristics are impaired only to a minimum extent, even when the support structure remains in the flow path (is not removed).

The invention is particularly applicable to a case, in which said at least one surface is located in a channel through said three-dimensional object. The reason for this is that in a channel through an object it is particularly difficult to remove residuals thoroughly.

Preferably, said support structure data are added in such a way to the computer-based model that, when a vertical direction is defined as a direction perpendicular to the plane in which the layers extend during the layer-wise manufacturing, at least a portion of the contact region is located at a lateral wall of the channel. This may serve to laterally stabilize the three-dimensional object during manufacture.

Preferably, said support structure data are added in such a way to the computer-based model that once the three-dimensional object has been manufactured in said contact region said support structure will provide a flow resistance that is smaller in the designated flow direction than in a direction angular thereto.

A support structure will almost always have differing resistances to a flow depending on its orientation with respect to a flow. According to this preferred implementation of the invention, the direction of the flow is taken into consideration in order to minimize the flow resistance. Here, the term "angular" refers to a direction which is at an angle to the flow direction that differs from zero degrees (for example a direction opposite to the flow direction, which would correspond to an angle of 180°, or a direction perpendicular to the flow direction).

Preferably, said support structure data are added in such a way to the computer-based model that once the three-dimensional object has been manufactured said support structure will provide a flow resistance that is smaller in the designated flow direction than in a direction angular thereto. Accordingly, as not only a contact region but a whole support structure is oriented such that the flow resistance will be at minimum, even when the whole support structure remains at the object to be manufactured, the flow characteristics will be affected only to a minimum extent.

Preferably, said support structure data define said support structure to comprise a main support structure part and a contact support structure part, said contact support structure part being located adjacent said portion of said at least one surface, wherein said contact support structure part is essentially V-shaped, U-shaped or Π-shaped in a cross-section, preferably in a cross-section perpendicular to said flow path. With the support structure at the contact region having the specified shape, it is easier to remove the support structure, as the contact region becomes very small.

Preferably, said support structure data are added in such a way to the computer-based model that, when a vertical direction is defined as a direction perpendicular to the plane in which the layers extend during the layer-wise manufacturing, said support structure once manufactured consists of a multitude of essentially vertical portions, at least two of which are preferably interconnected laterally by at least one interconnection structure.

Accordingly, mechanical strength of a support structure is achieved with a minimum number of contact regions between the support structure and the surface.

Preferably, in the support structure having a multitude of essentially vertical portions (particularly referring to the orientation of the three dimensional object during manufacture), at least two of which are preferably interconnected laterally by at least one interconnection structure, said at least one interconnection structure does not reach vertically to said portion of said at least one surface. Such lateral interconnection structure is particularly suitable for instance in such cases in which a comparatively wide support structure needs to be realized in order to give sufficient lateral support. It also helps to add additional stability to the support structure in the vertical direction as it may serve to transfer essentially vertical forces from one vertical portion onto the other, thereby helping to distribute such vertical forces more equally.

Preferably, in the support structure once manufactured said at least one interconnection has its largest vertical extensions at or near the interfaces to the vertical portions that are interconnected. Even more preferably, in the support structure once manufactured said at least one interconnection has an essentially H-shaped or U-shaped cross-section in a plane perpendicular to said vertical portions. All these measures may serve to direct the forces which the support structure has to withhold into the vertical portions which can be realized to bear the highest loads.

An inventive method of manufacturing a three-dimensional object by means of a layer-wise solidification of a building material (preferably using electromagnetic radiation or particle radiation), wherein said manufactured three-dimensional object is destined to be used in the flow path of a fluid flowing in a designated way around or through said object, comprises the following steps:
generating control data for a manufacture of a three-dimensional object by means of a layer-wise solidification of a building material by carrying out an inventive method for generating control data,
manufacturing said three-dimensional object on the basis of the control data by means of a layer-wise solidification of a building material.

When manufacturing objects on the basis of the control data provided by the inventive method, objects can be obtained that will show superior flow characteristics when used in the flow path of a fluid. For example, by the invention it is possible to obtain objects, in which an impeller is located in an internal channel through the object.

It should be mentioned that preferably said support structure is removed after the manufacture of said three-dimensional object in order to minimize flow resistance. When doing so, preferably after the removal of said support structure residuals of said support structure in said contact region are removed by means of a polishing treatment, said polishing treatment preferably including one of a milling step, an extrude honing step, a micro machining (MMP) step, an electrical discharge machining (EDM) step and a slide grinding (in particular a vibratory finishing) step.

An inventive control data generating assembly for generating control data for a manufacture of a three-dimensional object by means of a layer-wise solidification of a building material (preferably using electromagnetic radiation or particle radiation), wherein said manufactured three-dimensional object is destined to be used in a flow path of a fluid flowing in a designated way around or through said object, comprises the following:
an identification unit engineered to identify surface data in a three-dimensional computer-based model of said three-dimensional object, said surface data corresponding to at least one surface of the manufactured three-dimensional object, which at least one surface is destined to get into contact with the fluid,
a determination unit for determining the flow path adjacent a portion of said at least one surface
a modification unit which in operation modifies said three-dimensional computer-based model thus generating a modified computer-based model such that support structure data are added to the computer-based model, said support structure data specifying a support structure designed to be in contact with said portion of said at least one surface during the manufacture of said three-dimensional object,
wherein said support structure data are added to the computer-based model such that at least one contact region between the support structure and said portion of said at least one surface will essentially extend in parallel to the determined flow path adjacent said portion of said at least one surface and/or such that positions of a plurality of contact regions between a plurality of support structures and said portion of said at least one surface will essentially extend in parallel to the determined flow path adjacent said portion of said at least one surface and
a derivement unit which in operation derives control data for the manufacture of the three-dimensional object from the modified computer-based model.

The control data generating assembly e.g. may be part of a system for creating a computer-based 3D-model of an object to be manufactured by additive manufacturing. However, the assembly may also be a stand-alone computer or may even be integrated into an additive manufacturing apparatus. Here, the determination unit either may calculate by itself flow path data or may receive flow path data from a simulation program dedicated specifically to such calculations and known in the art.

An inventive apparatus for the manufacture of a three-dimensional object by means of a layer-wise solidification of a building material, wherein said manufactured three-dimensional object is destined to be used in the flow path of a fluid flowing in a designated way around or through said object, comprises an inventive control data generating assembly.

As the knowledge about the specifics of an additive manufacturing apparatus is not always present to a CAD designer being skilled in the specific design and application requirements for an object, a control data generating assembly preferably is located close to the additive manufacturing apparatus, either by being incorporated in the additive manufacturing apparatus or by being connected thereto via a data interface.

An inventive computer program comprises a sequence of instructions that enables a control data generating assembly to carry out an inventive method of generating control data and/or an apparatus for the manufacture of a three-dimensional object to carry out a method of manufacturing a three-dimensional object by means of a layer-wise solidification of a building material, when such sequence of instructions is carried out in the control data generating assembly and/or the apparatus for the manufacture of a three-dimensional object.

Though it is possible that all units of the control data generating assembly or at least a part thereof are implemented by hardware only, preferably, some, preferably all those units can be implemented by software.

Further developments according to the invention are described in the dependent claims. Here, features from the dependent claims and from the description related to the inventive methods may also refer to the inventive devices or vice versa, if there is no explicit statement that features refer only to a method and a device, respectively.
- Fig. 1: shows a schematic representation of a laser sintering device as example for an additive manufacturing device.
- Fig. 2: shows a vertical cut through an object to be manufactured by an additive manufacturing device, which object has a channel running therethrough.
- Fig. 3: shows a view onto the right face of the object illustrated in Fig. 2.
- Fig. 4: shows an oblique view onto the vertical cut of Fig. 2.
- Fig. 5: shows a schematic view of a channel in an object together with a support structure in the channel.
- Fig. 6: shows another example of a channel with a support structure positioned therein.
- Fig. 7: shows schematic illustrations of support structures with different contact support structure parts.
- Fig. 8: shows an embodiment of a control data generating assembly.

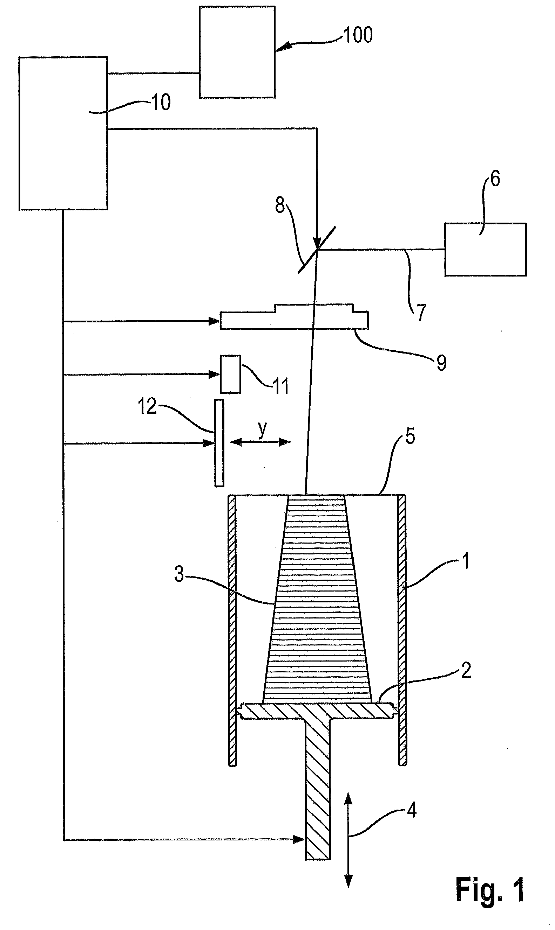

At first, for a description of an inventive method in the following a laser sintering device is described as example for an inventive additive manufacturing device by making reference to Fig. 1.

The device comprises a building container 1, in which a support 2 for carrying the object 3 to be generated is provided. By means of a height adjustment device 4, the support 2 can be moved in a vertical direction within the building container. Building material in powder form that has been applied as a layer is solidified in a building plane 5. A laser 6 that generates a laser beam 7 is provided for solidifying the material in powder form in the building plane 5. The laser beam 7 is scanned across the building plane 5 by means of a deflection device 8 and optionally a focussing device 9. A control unit 10 is provided, which control unit 10 drives the deflection device 8 and optionally the focussing device 9 such that the laser beam 7 may be directed to arbitrary positions within the building plane 5 inside of the building container 1.

The control unit 10 is operated by means of a control data set (instruction set) comprising a.o. data describing the structure of an object to be manufactured, in particular a three-dimensional computer-based model of an object defining the cross-section of the object in each respective layer of building material to be solidified. The control data set also comprises data defining the exact parameters for solidifying the building material.

A supply device 11 is provided, which supply device 11 supplies the building material in powder form for a layer to be applied. By means of an application device (recoating device) 12 building material is applied in the building plane 5 and flattened in order to have a smooth powder surface.

When the additive manufacturing device operates, the control unit 10 triggers the height adjustment device 4 to lower the support 2 layer by layer, the control unit 10 drives the application device 12 such that a new powder layer is applied in the building plane 5 and the control unit 10 drives the deflection device 8 and optionally also the laser 6 and/or the focussing device 9 such that the laser beam 7 is directed to all positions of the applied powder layer that correspond to the respective cross-section of the object to be solidified in the applied layer. In order to solidify the material, the powder grains are partially or completely melted by means of the laser beam 7, so that after having cooled down the powder grains are in a joined state forming a solid state region of the object to be generated.

All powders or powder mixtures suitable for a laser sintering or laser melting method may be used as building material in powder form. Such powders include e.g. plastic powders like polyamide or polystyerene, PEAK (Polyaryletherketone) elastomers such as PEBA (Polyether Block Amide), plastic-coated sand, ceramics powder or (which is particularly preferred) metal powder such as stainless steel powder or other metal powders adapted to a respective purpose, in particular alloys.

When building objects by means of an additive manufacturing process, often an object is built together with support structures supporting the object in order to compensate stress occurring in an object during the manufacturing process usually due to temperature differences. Usually, but not always, such support structures are removed when the additive manufacturing process has been completed. As already mentioned in the introduction, sometimes residues from the support structures remain on the surface, which residues are difficult to remove and provide an undesired resistance to the flow of a fluid adjacent to the surface. Here, according to the invention, when support structures are added, an effect of support structures or support structure residues onto the flow of a fluid adjacent the surface is taken into consideration. In particular, the invention makes use of the fact that when constructing a part that is destined to be used in a flow path of a fluid, usually simulations are made in order to study the flow of the fluid through or around said object. Such simulations can be used for determining the flow path direction at regions of an object surface, where a support structure is intended to be added during the manufacture of said object.

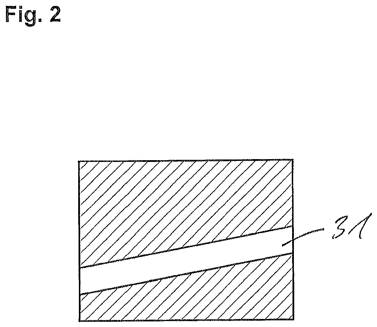

When adding support structures for a manufacture, model data describing the three-dimensional support structure are added to the three-dimensional computer-based model of the object, which means that the control data set used by the control unit 10 is modified. Here, according to the invention, a contact region between a support structure and an object surface destined to be in the flow path of a fluid is oriented such that said contact region extends essentially in parallel to the flow path adjacent said contact region after the support structure has been removed and the object is actually used in the intended way. This is illustrated by making reference to Figs. 2 to 4.

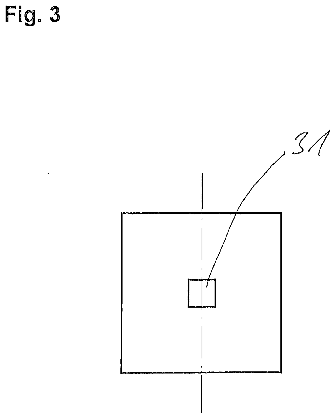

Fig. 2 shows a vertical cut through an object that has been manufactured by an additive manufacturing device, which object has a channel 31 running therethrough. The exemplary object has a cuboidal shape and Fig. 3 shows a view onto the right face of the object illustrated in Fig. 2. From Fig. 3 it is apparent that the channel 31 in this example has a quadratic cross-section. A dashed line in Fig. 3 indicates the position of the vertical cut shown in Fig. 2.

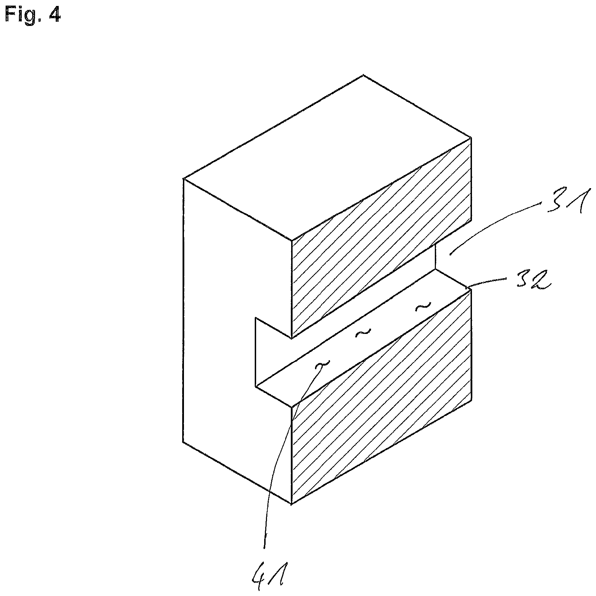

Fig. 4 shows a perspective three-dimensional view onto the plane shown in Fig. 2. Please note that the hatching in Fig. 2 and 4 is not related to the layers during the additive manufacturing process. In Fig. 4, residues 41 of a support structure that was present in the channel 31 during the manufacturing of the object can be recognized on the bottom surface 32 of the channel 31. Whereas the support structures have already been removed from the object, in the contact regions between the support structures and the bottom surface 32 residues 41 are still there.

In accordance with the present invention, the residues and contact regions, respectively, 41 in Fig. 4 have been designed taking into consideration the direction of the flow path of a fluid through the channel 31 adjacent the surface 32 during the intended use of the object. In the specific example of Fig. 4 the fluid will not have a straight flow path close to the surface 32, but will have a curved flow path at the positions where the contact regions 41 are located. By the adapted design of the contact regions 41, the flow resistance at the positions of residues 41 is minimized.

Though Figs. 2 to 4 show a channel through an object, the invention is not limited to channels through objects but is also applicable to outer surfaces of objects, in particular recesses. According to the invention, after a skilled person has decided at which positions a support structure will make contact to an object, the contact regions at that positions are defined in the inventive way. Here, the orientation of the contact regions with respect to the flow path will define the flow resistance of the residues. In case the contact regions have a longitudinal shape with the longest extension (largest dimension) in the direction of the flow path and a very small dimension perpendicular to the direction of the flow path, the flow resistance will be particularly small.

It shall be mentioned here that the size of the residues of the support structure in the contact regions may depend on a polishing process that is used for removing the residues. Nevertheless, irrespective of the kind of polishing process applied, the invention will lead to favourably small flow resistances for a given polishing method by the specific design of the contact regions between one or more support structures and the object surface.

When there is not only one but there are several contact regions between one or more support structures and an object surface, also the location of the individual contact regions with respect to one another will have an influence on the flow resistance when it is assumed that in each contact region a support structure residue is left and the object is used in a flow path of a fluid. This was realized by the inventors and therefore the inventors suggest arranging the contact regions of a support structure such that a direction of arrangement is in parallel to the flow path of the fluid, meaning e.g. that the arrangement of the contact regions is along a fluid layer for a laminar flow.

While the inventive choice of the orientation and shape of the contact regions of one or more support structures leads in any case to an improvement, there may be also a situation, in which the whole support structures are left at the object, for example in a case, in which it is impossible to remove such support structures. In particular for such a situation, the inventors suggest orienting the whole support structures in parallel to the flow path of the fluid around or through the object. In order to do so, a support structure has to be designed such that it has a longitudinal shape extending in the direction of the flow path at those portions of the surface adjacent to which a fluid will be flowing when using the object.

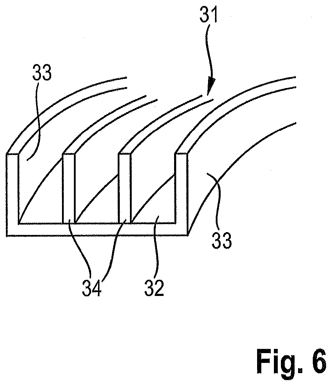

Fig. 6 shows an example for such a situation. In Fig. 6 a channel 31 is illustrated, which channel 31 belongs to an object to be manufactured by additive manufacturing. Such channel 31 has a bottom surface 32 and two sidewalls 33. As can be seen in Fig. 6, a support structure consists of two walls 34 running essentially in parallel to the sidewalls 33. In the example of Fig. 6 it is assumed that a fluid will flow through the channel 31 in a flow direction always in parallel to the sidewalls 33. Accordingly, the two walls 34 of the support structure extend in the flow direction in parallel to the sidewalls 33.

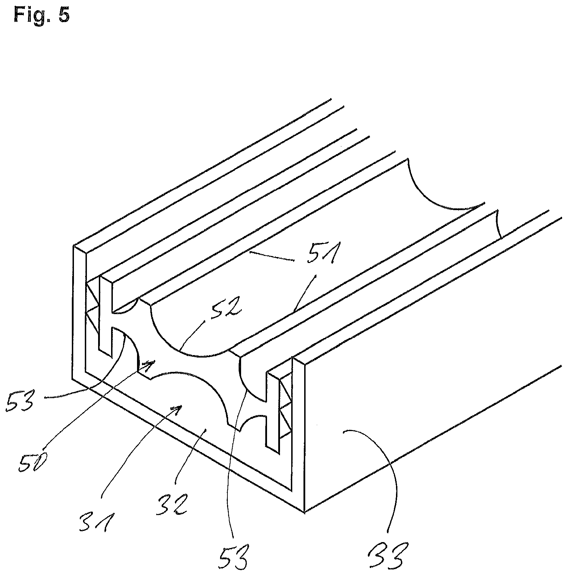

While during the manufacture of an object by additive manufacturing usually support structures provide support from below, according to the invention one can also have horizontally extending support structures, which may be advantageous due to the following consideration:
During the process of manufacturing an object by a layer-wise additive manufacturing method new layers of unsolidified powder are applied onto already solidified parts of the object (see Fig. 1). Here, fragile portions of an object may be in danger of being broken during the application of a new powder layer due to horizontal forces transferred from the application device onto those fragile portions. Thus, a support structure providing support in a horizontal direction will prevent such damages. A horizontal extension of a support structure can be implemented by connecting the support structure laterally to a side surface of the object to be produced. This is illustrated in Fig. 5.

Fig. 5 shows a channel 31, which is assumed to be a portion of an object to be produced. A support structure 50 is connected to the sidewalls 33 of such channel 31 thereby providing a lateral support to the sidewalls 33. In Fig. 5 the support 50 has particular strength in a direction perpendicular to the sidewalls 33 by providing a lateral interconnection 52 with U-shaped arches between vertical plates 51. Instead of a U-shape, it is possible to have a shape of the arch like a half of a "U" as designated by reference numbers 53 in Fig. 5. Alternatively, the lateral interconnections 52 may be shaped in a different way having nevertheless their largest vertical extensions near the interfaces to the vertical portions 51.

The support structure 50 shown in Fig. 5 does not have any connections to the bottom surface 32 of the channel 31. It is also possible to have such additional connections between the support structure 50 and the bottom surface 32. However, without such connections to the bottom surface a particularly strong resistance against lateral forces can be achieved.

It is also possible to have complicated webs of lateral interconnections 52 between vertical parts 51 of a support structure. Though this is not shown, it is further possible to have two support structures 50 such as the one shown in Fig. 5 intersecting at an angle (e.g. 90°) or to have a grid, in which a support structure 50 such as the one shown in Fig. 5 forms a bar within the grid. Please note here, that the grid may also be formed out of bars having a different shape than the support structure 50 shown in Fig. 5. What is important here is that a grid is formed from laterally extending bars that have no vertical connection to the object to be formed so that a particularly strong lateral support is provided.

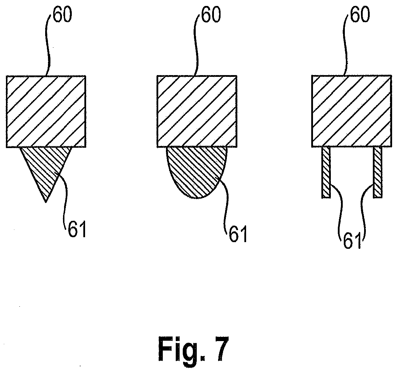

In cases in which it is intended to remove the support structure from the object after having manufactured the object, preferably there should be a preconfigured point of breakage for removing the support structure. In order to provide such a preconfigured breaking point, the support structure can be designed to have a main support structure part and a contact support structure part, the latter being located adjacent the contact region to the object to be manufactured. Here, the contact support structure part can be designed to break more easily than the main support structure part. This can be achieved for example by having an essentially V-shaped, U-shaped or Π-shaped contact support structure part. Fig. 7 shows different possible designs as examples. In Fig. 7 the main support structure part, which is shown only schematically, is designated by reference number 60 and each of the three exemplary contact support structure parts is designated by reference number 61. In addition, Fig. 5 shows an example for sawtooth-like contact support structure parts 61. Of course, the shapes of the contact support structure parts are only examples and each of the contact support structure parts 61 shown in Fig. 7 can for example be flipped upside-down. Moreover, the contact support structure parts preferably should be designed such that they extend in parallel to the flow path of the fluid.

According to the invention, control data, which are used as input by a control unit 10 in an additive manufacturing device, are generated. As already mentioned above, such control data generating method may be implemented by software or hardware alone or by a mixture of hardware and software. Accordingly, the actual device by which the control data generating method is implemented is termed here "control data generating assembly". Such control data generating assembly needs as input a computer-based model of at least a portion of the surface of a three-dimensional object to be generated by additive manufacturing.

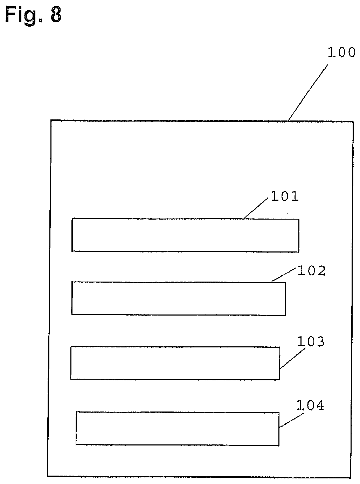

A control data generating assembly 100 is schematically illustrated in Fig. 8. It includes an identification unit 101 that identifies those surface data that correspond to at least one surface of the object that is destined to get into contact with a fluid flow. The information, which surface data are related to a surface destined to get into contact with a fluid flow either may be input by a user via a terminal or may already be included in a computer-based model of an object.

As it is necessary to determine the flow path adjacent that portion of the surface, where a support structure shall be added, either the control data generating assembly may calculate by itself for example the necessary vector fields or may receive respective data about the flow path from a different unit via an input device from a computer network or a portable data carrier. In each of both cases the corresponding part of the control data generating assembly (calculation device or input device) is termed "determination unit". Such a determination unit 102 is thus also illustrated in Fig. 8.

In order to add the support structure data, the three-dimensional computer-based model of the object to be manufactured has to be modified such that support structure data are added to the computer-based model. Here, a modification unit 103 adds the support structure to the computer-based model in accordance with the inventive methods as described above. In particular, the support structure will be added in such a way that a contact region between the support structure and the object will essentially extend in parallel to the flow path adjacent the region of the object surface where such contact region is located. In addition or alternatively to this in case of a plurality of contact regions these contact regions are added such that their positions extend in parallel to the flow path adjacent the surface where these contact regions are located.

Finally, the modified three-dimensional model data of the object have to be integrated into the control data for a manufacture of the three-dimensional object by means of an additive manufacturing apparatus. In other words, control data are derived based on the modified three-dimensional computer-based model of the object, which is the reason why that part of the control data generating assembly by which this implemented is shown in Fig. 8 as "derivement unit" 104.

The control data generating assembly 100 either may be implemented in an additive manufacturing device (as shown in Fig. 1) or may be implemented in a separate device. In the latter case it is necessary to transfer the control data to an additive manufacturing device via a portable data carrier or a computer network (e.g. the internet).

In case the inventive control data generating method is implemented by software, it is of course also possible that such software is running on a CAD-system used for designing an object. However, usually additive manufacturing experts have a better knowledge on necessary support structures than designers of an object in front of a CAD system.

In principle, the invention can be applied to any additive manufacturing device. In particular it can be applied to devices, in which objects are built layer-wise by melting or sintering powders by means of electromagnetic radiation or particle radiation such as laser sintering devices or laser melting devices.

Finally it shall be mentioned that a further optimization of the flow resistance can be achieved by taking into consideration the direction of the fluid flow. This is implemented by designing either a support structure as a whole or at least the part of the support structure at the contact regions to the object such that a flow resistance is smaller in the direction of a fluid flow than in a direction differing from the flow direction, such as a direction opposite to the flow direction. Also, the invention may be applied to the manufacturing of not only one object in a build run but to the manufacturing of several objects in parallel in the same build run. Here, surface data of objects that will get into contact with a fluid flow may all be treated in accordance with the invention when adding support structures.

## Claims

1. A method of generating control data for a manufacture of a three-dimensional object by means of a layer-wise solidification of a building material, wherein said manufactured three-dimensional object is destined to be used in a flow path of a fluid flowing in a designated way around or through said object, said method comprising the following steps:
identifying surface data in a three-dimensional computer-based model of said three-dimensional object, said surface data corresponding to at least one surface of the manufactured three-dimensional object, which at least one surface is destined to get into contact with the fluid,
determining the flow path adjacent a portion of said at least one surface in said computer-based model
modifying said three-dimensional computer-based model thus generating a modified computer-based model such that support structure data are added to the computer-based model, said support structure data specifying a support structure designed to be in contact with said portion of said at least one surface during the manufacture of said three-dimensional object,
wherein said support structure data are added to the computer-based model such that at least one contact region between the support structure and said portion of said at least one surface will essentially extend in parallel to the determined flow path adjacent said portion of said at least one surface and/or such that positions of a plurality of contact regions between a plurality of support structures and said portion of said at least one surface will essentially extend in parallel to the determined flow path adjacent said portion of said at least one surface, and
deriving control data for the manufacture of the three-dimensional object from the modified computer-based model.

2. The method according to claim 1, wherein said support structure data define a support structure that has a longitudinal shape such that in a direction in parallel to the flow path it is longer than in any other direction not in parallel to the flow path.

3. The method according to one of the preceding claims, wherein said at least one surface is located in a channel through said three-dimensional object.

4. The method according to claim 3, wherein said support structure data are added in such a way to the computer-based model that, when a vertical direction is defined as a direction perpendicular to the plane in which the layers extend during the layer-wise manufacturing, at least a portion of said contact region is located at a lateral wall of said channel.

5. The method according to one of the preceding claims,
wherein said support structure data are added in such a way to the computer-based model that once the three-dimensional object has been manufactured in said contact region said support structure will provide a flow resistance that is smaller in the designated flow direction than in a direction angular thereto.

6. The method according to claim 5,
wherein said support structure data are added in such a way to the computer-based model that once the three-dimensional object has been manufactured said support structure will provide a flow resistance that is smaller in the designated flow direction than in a direction angular thereto.

7. The method according to one of the preceding claims,
wherein said support structure data define said support structure to comprise a main support structure part and a contact support structure part, said contact support structure part being located adjacent said portion of said at least one surface, wherein said contact support structure part is essentially V-shaped, U-shaped or Π-shaped in a cross-section, preferably a cross-section perpendicular to said flow path.

8. The method according to one of the preceding claims,
wherein said support structure data are added in such a way to the computer-based model that, when a vertical direction is defined as a direction perpendicular to the plane in which the layers extend during the layer-wise manufacturing, said support structure once manufactured consists of a multitude of essentially vertical portions, at least two of which are preferably interconnected laterally by at least one interconnection structure.

9. The method according to claim 8, wherein in the support structure once manufactured said at least one interconnection structure does not reach vertically to said portion of said at least one surface.

10. The method according to claim 8 or 9, wherein in the support structure once manufactured said at least one interconnection has its largest vertical extensions at or near the interfaces to the vertical portions that are interconnected.

11. The method according to one of claims 8 to 10, wherein in the support structure once manufactured said at least one interconnection has an essentially H-shaped or U-shaped cross-section in a plane perpendicular to said vertical portions.

12. A method of manufacturing a three-dimensional object by means of a layer-wise solidification of a building material, wherein said manufactured three-dimensional object is destined to be used in the flow path of a fluid flowing in a designated way around or through said object, said method comprising the following steps:
generating control data for a manufacture of a three-dimensional object by means of a layer-wise solidification of a building material by carrying out a method according to one of the preceding claims,
manufacturing said three-dimensional object on the basis of the control data by means of a layer-wise solidification of a building material,
preferably removing the support structure after the manufacturing step.

13. A control data generating assembly for generating control data for a manufacture of a three-dimensional object by means of a layer-wise solidification of a building material, wherein said manufactured three-dimensional object is destined to be used in a flow path of a fluid flowing in a designated way around or through said object, said control data generating assembly comprising the following:
an identification unit (101) engineered to identify surface data in a three-dimensional computer-based model of said three-dimensional object, said surface data corresponding to at least one surface of the manufactured three-dimensional object, which at least one surface is destined to get into contact with the fluid,
a determination unit (102) for determining the flow path adjacent a portion of said at least one surface
a modification unit (103) which in operation modifies said three-dimensional computer-based model thus generating a modified computer-based model such that support structure data are added to the computer-based model, said support structure data specifying a support structure designed to be in contact with said portion of said at least one surface during the manufacture of said three-dimensional object,
wherein said support structure data are added to the computer-based model such that at least one contact region between the support structure and said portion of said at least one surface will essentially extend in parallel to the determined flow path adjacent said portion of said at least one surface and/or such that positions of a plurality of contact regions between a plurality of support structures and said portion of said at least one surface will essentially extend in parallel to the determined flow path adjacent said portion of said at least one surface, and
a derivement unit (104) which in operation derives control data for the manufacture of the three-dimensional object from the modified computer-based model.

14. An apparatus for the manufacture of a three-dimensional object by means of a layer-wise solidification of a building material, wherein said manufactured three-dimensional object is destined to be used in the flow path of a fluid flowing in a designated way around or through said object, the apparatus comprising
a control data generating assembly according to claim 13.

15. Computer program comprising a sequence of instructions that enables a control data generating assembly to carry out a method according to one of claims 1 to 11 and/or an apparatus for the manufacture of a three-dimensional object to carry out a method according to claim 12, when such sequence of instructions is carried out in the control data generating assembly and/or the apparatus.

## Patentansprüche

1. Verfahren der Generierung von Steuerdaten für eine Herstellung eines dreidimensionalen Objekts mittels einer schichtweisen Verfestigung eines Aufbaumaterials, wobei das hergestellte dreidimensionale Objekt dazu bestimmt ist, in einem Strömungsweg eines Fluids, das in einer vorgesehenen Weise um das Objekt herum oder durch das Objekt fließt, verwendet zu werden, wobei das Verfahren die folgenden Schritte aufweist:
Identifizieren von Oberflächendaten in einem dreidimensionalen computerbasierten Modell des dreidimensionalen Objekts, wobei die Oberflächendaten zumindest einer Oberfläche des hergestellten dreidimensionalen Objekts entsprechen, die dazu bestimmt ist, in Kontakt mit dem Fluid zu gelangen,
Ermitteln des Strömungswegs angrenzend an einen Abschnitt der zumindest einen Oberfläche in dem computerbasierten Modell,
Modifizieren des dreidimensionalen computerbasierten Modells, wodurch ein modifiziertes computerbasiertes Modell dergestalt erzeugt wird, dass Stützstrukturdaten zu dem computerbasierten Modell hinzugefügt werden, wobei die Stützstrukturdaten eine Stützstruktur spezifizieren, die ausgelegt ist, während der Herstellung des dreidimensionalen Objekts in Kontakt mit dem Abschnitt der zumindest einen Oberfläche zu gelangen,
wobei die Stützstrukturdaten zu dem computerbasierten Modell dergestalt hinzugefügt werden, dass zumindest eine Kontaktregion zwischen der Stützstruktur und dem Abschnitt der zumindest einen Oberfläche sich im Wesentlichen parallel zu dem ermittelten Strömungsweg angrenzend an den Abschnitt der zumindest einen Oberfläche erstreckt, und/oder dergestalt, dass Stellen einer Mehrzahl von Kontaktregionen zwischen einer Mehrzahl von Stützstrukturen und dem Abschnitt der zumindest einen Oberfläche sich im Wesentlichen parallel zu dem ermittelten Strömungsweg angrenzend an den Abschnitt der zumindest einen Oberfläche erstrecken, und
Ableiten von Steuerdaten für die Herstellung des dreidimensionalen Objekts aus dem modifizierten computerbasierten Modell.

2. Verfahren nach Anspruch 1, wobei die Stützstrukturdaten eine Stützstruktur definieren, welche eine längliche Gestalt dergestalt aufweist, dass sie in einer Richtung parallel zu dem Strömungsweg länger ist als in irgend einer anderen Richtung, die nicht parallel zu dem Strömungsweg ist.

3. Verfahren nach einem der vorangehenden Ansprüche, wobei die zumindest eine Oberfläche in einem Kanal durch das dreidimensionale Objekt liegt.

4. Verfahren nach Anspruch 3, wobei die Stützstrukturdaten in solch einer Weise zu dem computerbasierten Modell hinzugefügt werden, dass, wenn eine Vertikalrichtung als eine Richtung senkrecht zu der Ebene definiert ist, in der sich die Schichten während der schichtweisen Herstellung erstrecken, zumindest ein Abschnitt der Kontaktregion an einer Seitenwand des Kanals liegt.

5. Verfahren nach einem der vorangehenden Ansprüche, wobei die Stützstrukturdaten in solch einer Weise zu dem computerbasierten Modell hinzugefügt werden, dass, nachdem das dreidimensionale Objekt hergestellt wurde, die Stützstruktur in der Kontaktregion einen Strömungswiderstand liefert, der in der vor gesehenen Strömungsrichtung geringer ist als in einer Richtung unter einem Winkel dazu.

6. Verfahren nach Anspruch 5, wobei die Stützstrukturdaten in solch einer Weise zu dem computerbasierten Modell hinzugefügt werden, dass, nachdem das dreidimensionale Objekt hergestellt wurde, die Stützstruktur einen Strömungswiderstand liefern wird, der in der vorgesehenen Strömungsrichtung geringer ist als in einer Richtung unter einem Winkel dazu.

7. Verfahren nach einem der vorangehenden Ansprüche, wobei die Stützstrukturdaten die Stützstruktur so definieren, dass sie einen Haupt-Stützstrukturabschnitt und einen Kontakt-Stützstrukturabschnitt aufweist, wobei der Kontakt-Stützstrukturabschnitt an den Abschnitt der zumindest einen Oberfläche angrenzend angeordnet ist, wobei der Kontakt-Stützstrukturabschnitt in einem Querschnitt, vorzugsweise einem Querschnitt senkrecht zum Strömungsweg, V-förmig, U-förmig oder Π-förmig ist.

8. Verfahren nach einem der vorangehenden Ansprüche, wobei die Stützstrukturdaten in solch einer Weise zu dem computerbasierten Modell hinzugefügt werden, dass, wenn eine Vertikalrichtung als eine Richtung senkrecht zu der Ebene definiert ist, in der sich die Schichten während der schichtweisen Herstellung erstrecken, die Stützstruktur nach ihrer Herstellung aus einer Mehrzahl von im Wesentlichen vertikalen Abschnitten besteht, von denen zumindest zwei vorzugsweise über zumindest eine Zwischenverbindungsstruktur seitlich verbunden sind.

9. Verfahren nach Anspruch 8, wobei in der Stützstrukturen nach ihrer Herstellung die zumindest eine Zwischenverbindungsstruktur vertikal nicht an den Abschnitt der zumindest einen Oberfläche heranreicht.

10. Verfahren nach Anspruch 8 oder 9, wobei in der Stützstrukturen nach ihrer Herstellung die zumindest eine Zwischenverbindung ihre größte vertikale Ausdehnung an oder nahe den Kontaktflächen der miteinander verbundenen Vertikalabschnitte aufweist.

11. Verfahren nach einem der Ansprüche 8 bis 10, wobei in der Stützstruktur nach ihrer Herstellung die zumindest eine Zwischenverbindung in einer Ebene senkrecht zu den Vertikalabschnitten einen im Wesentlichen H-förmigen oder U-förmigen Querschnitt aufweist.

12. Verfahren zum Herstellen eines dreidimensionalen Objekts mittels einer schichtweisen Verfestigung eines Aufbaumaterials, wobei das hergestellte dreidimensionale Objekt dazu bestimmt ist, in dem Strömungsweg eines Fluids, das in einer vorgesehenen Weise um das Objekt herum oder durch das Objekt fließt, verwendet zu werden, wobei das Verfahren die folgenden Schritte aufweist:
Erzeugen von Steuerdaten für eine Herstellung eines dreidimensionalen Objekts mittels einer schichtweisen Verfestigung eines Aufbaumaterials, indem ein Verfahren gemäß einem der vorstehenden Ansprüche durchgeführt wird,
Herstellen des dreidimensionalen Objekts auf der Grundlage der Steuerdaten mittels einer schichtweisen Verfestigung eines Aufbaumaterials,
vorzugsweise Entfernen der Stützstrukturen nach dem Herstellungsschritt.

13. Steuerdaten-Erzeugungsanordnung zum Erzeugen von Steuerdaten für eine Herstellung eines dreidimensionalen Objekts mittels einer schichtweisen Verfestigung eines Aufbaumaterials, wobei das hergestellte dreidimensionale Objekt dazu bestimmt ist, in einem Strömungsweg eines Fluids, das in einer vorgesehenen Weise um das Objekt herum oder durch das Objekt fließt, verwendet zu werden, wobei die Steuerdaten-Erzeugungsanordnung aufweist:
eine Identifizierungseinheit (101), die ausgelegt ist, in einem dreidimensionalen computerbasierten Modell des dreidimensionalen Objekts Oberflächendaten zu identifizieren, wobei die Oberflächendaten zumindest einer Oberfläche des hergestellten dreidimensionalen Objekts entsprechen, welche dazu bestimmt ist, in Kontakt mit dem Fluid zu gelangen,
eine Ermittlungseinheit (102) zum Ermitteln des Strömungswegs angrenzend an einen Abschnitt der zumindest einen Oberfläche,
eine Modifizierungseinheit (103), welche im Betrieb das dreidimensionale computerbasierte Modell modifiziert, wodurch ein modifiziertes computerbasiertes Modell dergestalt erzeugt wird, dass Stützstrukturdaten zu dem computerbasierten Modell hinzugefügt werden, wobei die Stützstrukturdaten eine Stützstruktur spezifizieren, die ausgelegt ist, während der Herstellung des dreidimensionalen Objekts in Kontakt mit dem Abschnitt der zumindest einen Oberfläche zu gelangen,
wobei die Stützstrukturdaten zu dem computerbasierten Modell dergestalt hinzugefügt werden, dass zumindest eine Kontaktregion zwischen der Stützstruktur und dem Abschnitt der zumindest einen Oberfläche sich im Wesentlichen parallel zu dem ermittelten Strömungsweg angrenzend an den Abschnitt der zumindest einen Oberfläche erstreckt, und/oder dergestalt, dass Stellen einer Mehrzahl von Kontaktregionen zwischen einer Mehrzahl von Stützstrukturen und dem Abschnitt der zumindest einen Oberfläche sich im Wesentlichen parallel zu dem ermittelten Strömungsweg angrenzend an den Abschnitt der zumindest einen Oberfläche erstrecken, und
eine Ableitungseinheit (104), die im Betrieb Steuerdaten für die Herstellung des dreidimensionalen Objekts aus dem modifizierten computerbasierten Modell ableitet.

14. Vorrichtung zur Herstellung eines dreidimensionalen Objekts mittels einer schichtweisen Verfestigung eines Aufbaumaterials, wobei das hergestellte dreidimensionale Objekt dazu bestimmt ist, in einem Strömungsweg eines Fluids, das in einer vorgesehenen Weise um das Objekt herum oder durch das Objekt fließt, verwendet zu werden, wobei die Vorrichtung aufweist:
eine Steuerdaten-Erzeugungsanordnung nach Anspruch 13.

15. Computerprogramm mit einer Abfolge von Anweisungen, die es einer Steuerdaten-Erzeugungsanordnung ermöglichen, ein Verfahren nach einem der Ansprüche 1 bis 11 durchzuführen und/oder die es einer Vorrichtung zur Herstellung eines dreidimensionalen Objekts ermöglichen, ein Verfahren nach Anspruch 12 durchzuführen, wenn solch eine Abfolge von Anweisungen in der Steuerdaten-Erzeugungsanordnung und/oder der Vorrichtung ausgeführt wird.

## Revendications

1. Procédé de génération de données de commande pour une fabrication d'un objet tridimensionnel au moyen d'une solidification par couches d'un matériau de construction, dans lequel ledit objet tridimensionnel fabriqué est destiné à être utilisé dans un trajet d'écoulement d'un fluide s'écoulant d'une manière désignée autour dudit objet ou à travers celui-ci, ledit procédé comprenant les étapes suivantes :
identifier des données de surface dans un modèle informatique tridimensionnel dudit objet tridimensionnel, lesdites données de surface correspondant à au moins une surface de l'objet tridimensionnel fabriqué, laquelle au moins une surface est destinée à entrer en contact avec le fluide,
déterminer le trajet d'écoulement adjacent à une portion de ladite au moins une surface dans ledit modèle informatique
modifier ledit modèle informatique tridimensionnel, générant ainsi un modèle informatique modifié tel que des données de structure de support sont ajoutées au modèle informatique, lesdites données de structure de support spécifiant une structure de support conçue pour être en contact avec ladite portion de ladite au moins une surface pendant la fabrication dudit objet tridimensionnel,
dans lequel lesdites données de structure de support sont ajoutées au modèle informatique de sorte qu'au moins une région de contact entre la structure de support et ladite portion de ladite au moins une surface s'étende essentiellement parallèlement au trajet d'écoulement déterminé adjacent à ladite portion de ladite au moins une surface, et/ou de sorte que des positions d'une pluralité de régions de contact entre une pluralité de structures de support et ladite portion de ladite au moins une surface s'étendent essentiellement parallèlement au trajet d'écoulement déterminé adjacent à ladite portion de ladite au moins une surface, et
dériver des données de commande pour la fabrication de l'objet tridimensionnel à partir du modèle informatique modifié.

2. Procédé selon la revendication 1, dans lequel lesdites données de structure de support définissent une structure de support qui a une forme longitudinale telle que, dans une direction parallèle au trajet d'écoulement, elle est plus longue que dans toute autre direction non parallèle au trajet d'écoulement.

3. Procédé selon l'une des revendications précédentes, dans lequel ladite au moins une surface est située dans un canal à travers ledit objet tridimensionnel.

4. Procédé selon la revendication 3, dans lequel lesdites données de structure de support sont ajoutées au modèle informatique de telle manière que, lorsqu'une direction verticale est définie comme une direction perpendiculaire au plan dans lequel les couches s'étendent pendant la fabrication par couches, au moins une portion de ladite région de contact est située au niveau d'une paroi latérale dudit canal.

5. Procédé selon l'une des revendications précédentes, dans lequel lesdites données de structure de support sont ajoutées au modèle informatique de telle manière qu'une fois que l'objet tridimensionnel a été fabriqué dans ladite région de contact, ladite structure de support fournit une résistance à l'écoulement qui est plus petite dans la direction d'écoulement désignée que dans une direction angulaire à celle-ci.

6. Procédé selon la revendication 5, dans lequel lesdites données de structure de support sont ajoutées au modèle informatique de telle manière qu'une fois que l'objet tridimensionnel a été fabriqué, ladite structure de support fournit une résistance à l'écoulement qui est plus petite dans la direction d'écoulement désignée que dans une direction angulaire à celle-ci.

7. Procédé selon l'une des revendications précédentes, dans lequel lesdites données de structure de support définissent ladite structure de support pour comprendre une partie de structure de support principale et une partie de structure de support de contact, ladite partie de structure de support de contact étant située adjacente à ladite portion de ladite au moins une surface, dans lequel ladite partie de structure de support de contact est essentiellement en forme de V, en forme de U ou en forme de Π dans une section transversale, de préférence une section transversale perpendiculaire audit trajet d'écoulement.

8. Procédé selon l'une des revendications précédentes, dans lequel lesdites données de structure de support sont ajoutées au modèle informatique de telle manière que, lorsqu'une direction verticale est définie comme une direction perpendiculaire au plan dans lequel les couches s'étendent pendant la fabrication par couches, ladite structure de support, une fois fabriquée, consiste en une multitude de portions essentiellement verticales, dont au moins deux sont de préférence interconnectées latéralement par au moins une structure d'interconnexion.

9. Procédé selon la revendication 8, dans lequel, dans la structure de support une fois fabriquée, ladite au moins une structure d'interconnexion n'atteint pas verticalement ladite portion de ladite au moins une surface.

10. Procédé selon la revendication 8 ou 9, dans lequel, dans la structure de support une fois fabriquée, ladite au moins une interconnexion a ses plus grandes extensions verticales au niveau ou à proximité des interfaces avec les portions verticales qui sont interconnectées.

11. Procédé selon l'une des revendications 8 à 10, dans lequel, dans la structure de support une fois fabriquée, ladite au moins une interconnexion a une section transversale essentiellement en forme de H ou de U dans un plan perpendiculaire auxdites portions verticales.

12. Procédé de fabrication d'un objet tridimensionnel au moyen d'une solidification par couches d'un matériau de construction, dans lequel ledit objet tridimensionnel fabriqué est destiné à être utilisé dans le trajet d'écoulement d'un fluide s'écoulant d'une manière désignée autour dudit objet ou à travers celui-ci, ledit procédé comprenant les étapes suivantes :
générer des données de commande pour une fabrication d'un objet tridimensionnel au moyen d'une solidification par couches d'un matériau de construction en effectuant un procédé selon l'une des revendications précédentes,
fabriquer ledit objet tridimensionnel sur la base des données de commande au moyen d'une solidification par couches d'un matériau de construction,
retirer de préférence la structure de support après l'étape de fabrication.

13. Ensemble de génération de données de commande pour générer des données de commande pour une fabrication d'un objet tridimensionnel au moyen d'une solidification par couches d'un matériau de construction, dans lequel ledit objet tridimensionnel fabriqué est destiné à être utilisé dans un trajet d'écoulement d'un fluide s'écoulant d'une manière désignée autour dudit objet ou à travers celui-ci, ledit ensemble de génération de données de commande comprenant les éléments suivants :
une unité d'identification (101) conçue pour identifier des données de surface dans un modèle informatique tridimensionnel dudit objet tridimensionnel, lesdites données de surface correspondant à au moins une surface de l'objet tridimensionnel fabriqué, laquelle au moins une surface est destinée à entrer en contact avec le fluide,
une unité de détermination (102) pour déterminer le trajet d'écoulement adjacent à une portion de ladite au moins une surface,
une unité de modification (103) qui, en fonctionnement, modifie ledit modèle informatique tridimensionnel, générant ainsi un modèle informatique modifié tel que des données de structure de support sont ajoutées au modèle informatique, lesdites données de structure de support spécifiant une structure de support conçue pour être en contact avec ladite portion de ladite au moins une surface pendant la fabrication dudit objet tridimensionnel,
dans lequel lesdites données de structure de support sont ajoutées au modèle informatique de sorte qu'au moins une région de contact entre la structure de support et ladite portion de ladite au moins une surface s'étende essentiellement parallèlement au trajet d'écoulement déterminé adjacent à ladite portion de ladite au moins une surface, et/ou de sorte que des positions d'une pluralité de régions de contact entre une pluralité de structures de support et ladite portion de ladite au moins une surface s'étendent essentiellement parallèlement au trajet d'écoulement déterminé adjacent à ladite portion de ladite au moins une surface, et
une unité de dérivation (104) qui, en fonctionnement, dérive des données de commande pour la fabrication de l'objet tridimensionnel à partir du modèle informatique modifié.

14. Appareil pour la fabrication d'un objet tridimensionnel au moyen d'une solidification par couches d'un matériau de construction, dans lequel ledit objet tridimensionnel fabriqué est destiné à être utilisé dans le trajet d'écoulement d'un fluide s'écoulant d'une manière désignée autour dudit objet ou à travers celui-ci, l'appareil comprenant un ensemble de génération de données de commande selon la revendication 13.

15. Programme informatique comprenant une séquence d'instructions qui permet à un ensemble de génération de données de commande d'effectuer un procédé selon l'une des revendications 1 à 11 et/ou à un appareil pour la fabrication d'un objet tridimensionnel d'effectuer un procédé selon la revendication 12, lorsque cette séquence d'instructions est effectuée dans l'ensemble de génération de données de commande et/ou dans l'appareil.
